# EUROPEAN PATENT SPECIFICATION

(11) **EP 1 790 559 B1**
(45) Date of publication and mention of the grant of the patent: **29.09.2010**
(21) Application number: 06024408.4
(22) Date of filing: 24.11.2006
(51) Int. Cl.: B62J 35/00, B62J 1/12, B62M 7/04, B62K 11/00

(54) **Straddle-type vehicle**
Im Grätschsitz zu benutzendes Fahrzeug
Véhicule du type monté à califourchon

(30) Priority: 25.11.2005 JP 2005340817
(43) Date of publication of application: 30.05.2007
(73) Proprietor: Yamaha Hatsudoki Kabushiki Kaisha, Shizuoka-ken Shizuoka 438-8501 (JP)
(72) Inventor: Tsuya, Koji, Iwata-shi Shizuoka-ken 438-8501 (JP)
(74) Representative: Grünecker, Kinkeldey, Stockmair & Schwanhäusser Anwaltssozietät

(56) References cited:
- FR-A- 2 405 860
- GB-A- 2 114 945
- US-A- 4 694 924
- US-A1- 2003 000 755

## Description

The present invention relates to a straddle-type vehicle, in particular a motorcycle, and more specifically to a cooling structure that can avoid an increase in the temperature of a fuel tank mounted above the engine.

US-A-4 694 924 shows a straddle-type vehicle according to the preamble of claim 1.

Motorcycles are generally constructed such that an engine is suspended from and supported by a lower central part of a body frame; a fuel tank is mounted above the engine; and a seat is disposed behind the fuel tank (see Patent Document 1 : JP-A-2003-112678).

Meanwhile, when the engine and the fuel tank are mounted in such positional relationship to each other as in the conventional motorcycles described above, a bottom portion of the fuel tank will be heated by engine heat, resulting in an increase in the temperature of fuel in the fuel tank. Conventionally, to avoid an increase in the temperature of the fuel in the fuel tank, a heat insulation sheet or the like has widely been used for covering the bottom portion of the fuel tank.

In view of the foregoing problem, it is, therefore, an object of the present invention to provide a straddle-type vehicle, in particular a motorcycle, in which a bottom portion of a fuel tank can be prevented from being heated by engine heat to thereby avoid an increase in the temperature of the fuel.

This objective is solved in an inventive manner by a straddle-type vehicle, in particular a motorcycle, comprising: a body frame; an engine supported by the body frame; a fuel tank mounted on the body frame so as to be located adjacent to the engine; and a seat disposed adjacent to the fuel tank, wherein the seat includes: a seat frame attached to the body frame and a seat cushion mounted on the seat frame, wherein the seat frame has an air introduction opening formed behind the seat cushion, and provides an air passage for guiding air introduced from the air introduction opening toward a bottom wall of the fuel tank.

Preferably, the engine is supported by a lower part of the body frame, the fuel tank is located behind and above the engine, and the seat is disposed behind the fuel tank.

Further, preferably the air passage is defined by the seat frame.

Yet further, preferably the body frame includes left and right tank rails, and the seat frame having a tubular shape extends rearward from the tank rails and has a front part attached to the left and right tank rails.

According to a another preferred embodiment, the seat frame includes: a top wall; a bottom wall; and left and right side walls respectively extending between and connecting the left and right ends of the top wall and the bottom wall in one body.

Preferably, the air introduction opening is formed in the top wall and behind the seat cushion.

Further, preferably the bottom wall is formed so as to cover a bottom portion of the fuel tank from below.

Yet further, preferably the air introduced from the air introduction opening is directed forward through a space between a bottom portion of the fuel tank and the seat frame.

Therein, a rear cushion may be disposed below a forward part of the seat frame, wherein the seat frame may be provided with an air outlet for guiding the air toward the rear cushion.

Preferably, the air outlet is formed at the rear end of a stepped-down portion that is formed on the bottom wall of the seat frame.

Further, preferably a bottom portion of the fuel tank has an oil collecting section protruding downward, wherein a portion of the seat frame opposed to the oil collecting section has a protruded portion protruding downward.

Yet further, preferably the front end of the protruded portion has a cutout recessed rearward.

According to yet another preferred embodiment, the top wall of the seat frame has: a top wall cutout formed in a front portion thereof and being open forward; and an opening formed behind the top wall cutout and being open upward, wherein a space defined by the top wall cutout is substantially occupied by a rear portion of the fuel tank, and the opening is covered by the seat cushion.

Preferable, a front portion of the seat cushion is disposed on the upper face of a rear portion of the fuel tank.

Further, preferably the bottom wall of the seat frame is formed so as to extend along the top face of a rear fender that covers a rear wheel.

In the following, the present invention is explained in greater detail with respect to several embodiments thereof in conjunction with the accompanying drawings, wherein:
- FIG. 1: is a side view of a motorcycle according to an embodiment,
- FIG. 2: is a sectional side view illustrating an air passage defined by a seat frame of the motorcycle,
- FIG. 3: is a plan view of the seat frame in FIG. 2,
- FIG. 4: is a bottom view of the seat frame in FIG. 2,
- FIG. 5: is a side view of the seat frame in FIG. 2,

- FIG. 6: is a sectional front view of vehicle body mounting parts of the seat frame (sectional view along the line VI-VI in FIG. 5),
- FIG. 7: is a sectional front view of the seat frame (sectional view along the line VII-VII in FIG. 2),
- FIG. 8: is a sectional front view of the seat frame (sectional view along the line VIII-VIII in FIG. 2), and
- FIG. 9: is a sectional front view of the seat frame (sectional view along the line IX-IX in FIG. 2).

### Description of Reference Numerals and Symbols:

1: motorcycle
1 a: body frame
3,3: left and right tank rails
5: seat
6: seat frame
6a: top wall
6b: bottom wall
6c,6c: left and right side walls
6d: top wall cutout
6f: opening
6h': air introduction opening
6j: protruded portion
6m: air outlet
6n: cutout
7: seat cushion
13a: cushion unit
15: fuel tank
15b: extension (rear portion of fuel tank)
15d: oil collecting section
20: engine
A: air passage

An embodiment will now be described with reference to the accompanying drawings.

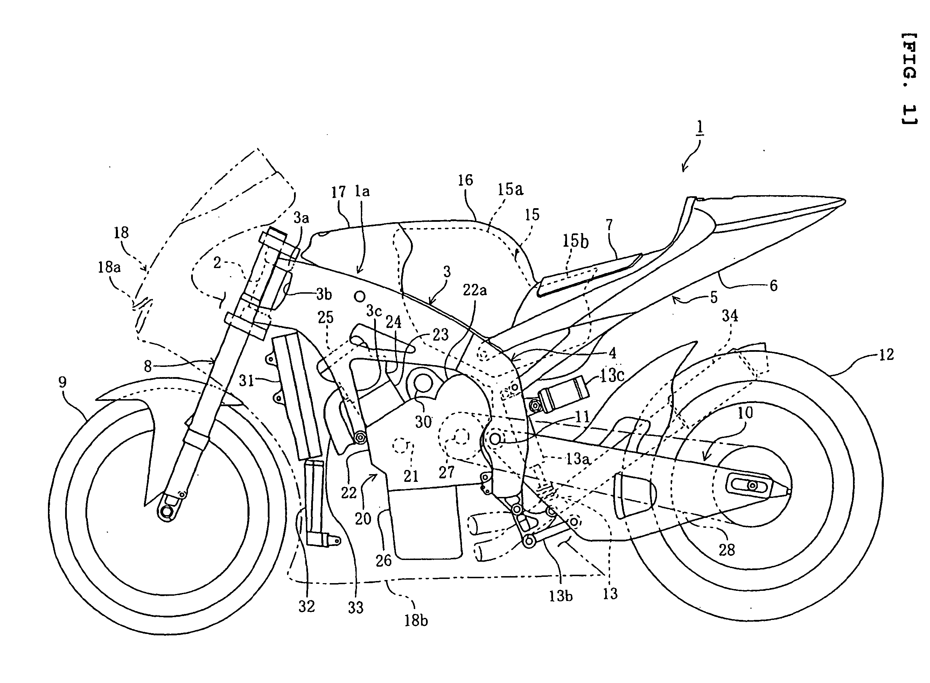

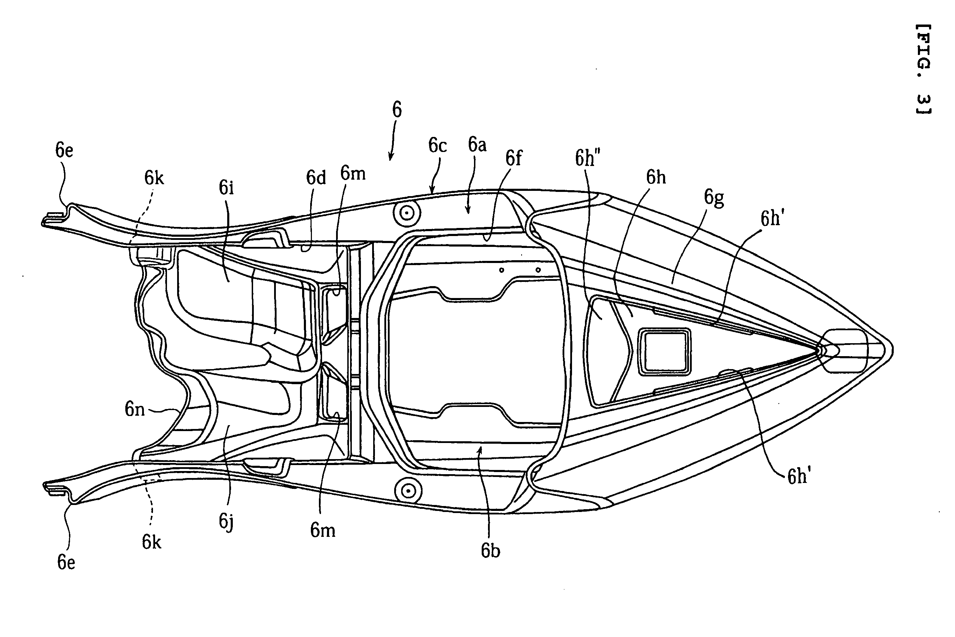

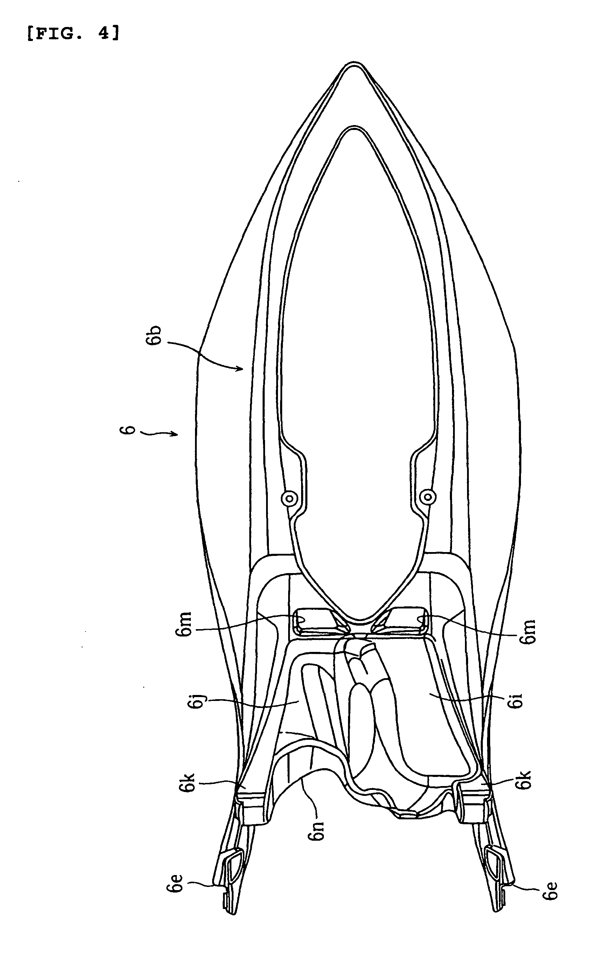

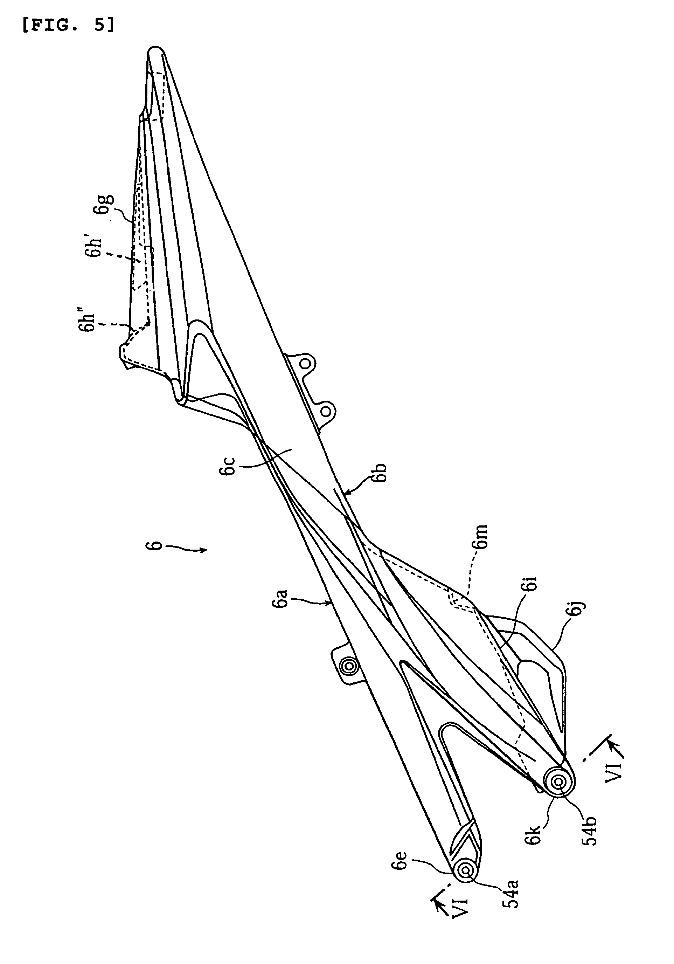

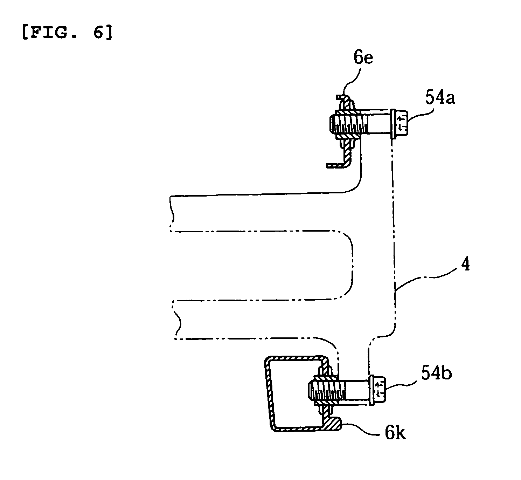

FIGs. 1 to 7 are views illustrating a motorcycle according to an embodiment. "Front and rear" or "left and right" referred to in this embodiment means the front and rear or the left and right when viewed by a rider sitting on the seat.

In the figures, reference numeral 1 denotes a motorcycle. The motorcycle is generally constructed such that a front wheel 9 and a rear wheel 12 are respectively disposed forward and rearward of a body frame 1 a, an engine 20 is suspended from and supported by a lower part of the body frame 1a, and a cowling 18 is provided to surround the front, left and right sides of the engine 20 suspended from the body frame 1 a.

The body frame 1 a includes a head pipe 2; left and right tank rails 3, 3 extending from the head pipe 2 obliquely downward and rearward, rearward; and left and right rear arm brackets 4, 4 extending from the rear ends of the left and right tank rails 3, 3 downward. A seat 5 is attached to the left and right rear arm brackets 4, 4.

A front fork 8 is supported by the head pipe 2 in a manner to rotate to the left and right. The front wheel 9 is rotatably supported at the lower end of the front fork 8, and an upper part of the front fork has steering handlebars (not shown) attached thereto.

A rear arm 10 is supported by vertical central parts of the left and right rear arm brackets 4 via a pivot shaft 11 for up-and-down pivotal movement, and the rear wheel 12 is rotatably supported at the rear end of the rear arm 10. Between the rear arm 10 and the left and right rear arm brackets 4, 4, there is disposed a rear suspension 13 including a cushion unit 13a and a link mechanism 13b.

A fuel tank 15 extends between and mounted to the left and right tank rails 3, 3. The fuel tank 15 includes a main part 15a located between the tank rails 3, 3 and above the rear ends thereof, and an extension 15b extending from the main part 15a obliquely upward and rearward. The fuel tank 15 is generally located behind and above the engine 20, with its large part disposed so as to project upward from the left and right tank rails 3, 3.

The extension 15b has a bottom 15e with an opening 15c that is formed on one side in a vehicle width direction, specifically on the left side in this embodiment. The peripheral edge of the opening 15c has an oil collecting section 15d removably attached thereto that protrudes downward and has a bowl shape. In the oil collecting section 15d, there is located a suction port 55a of a fuel pump 55 designed to be included in a tank.

The fuel tank 15 has a tank cover 16 attached thereto for covering an upper portion of the fuel tank 15. A top cover 17 covers a forward part of the fuel tank 15 between the left and right tank rails 3, 3 from above.

The tank cover 16 is attached to the fuel tank 15. The top cover 17 is removably and independently attached to the tank cover 16.

The left and right tank rails 3, 3 have a height larger than a width in the vehicle width direction and is in a vertically extending rectangular shape when viewed in a cross sectional view. In the vicinity of the head pipe 2, the left and right tank rails 3, 3 are formed in the manner that the distance in the vehicle direction between them becomes smaller as it comes closer to the head pipe 2, and the front ends 3a of the left and right tank rails are welded to the head pipe 2. The forward portions of the left and right tank rails 3, 3 are each formed together with an under frame part 3c extending to be inclined downward, rearward along a side of the engine 20.

The cowling 18 includes a front part 18a for covering the front side of the head pipe 2, and side parts 18b, 18b for covering the lower peripheries of the left and right tank rails 3, 3 and the left and right sides of the engine 20. The front part 18a has an opening 18c for introducing a running wind into a space defined by the cowling 18.

The engine 20 is a water-cooled, four-stroke, in-line, four-cylinder engine. The engine 20 is constructed such that a cylinder block 23, a cylinder head 24, and a head cover 25, which are common between the four cylinders, are mounted on top of each other and bolted to an upper joining face of a crankcase 22 with a crankshaft 21 housed therein; and an oil sump 26 is connected to a lower joining face of the crankcase 22.

A rear portion of the crankcase 22 is formed together with a transmission case 22a having a shift mechanism (not shown) included therein. The transmission case 22a has an output shaft 27 disposed therein for taking out engine power, which is transmitted from the output shaft 27 to the rear wheel 12 via a chain belt 28 for the rotation of the rear wheel 12.

In front of the engine 20, there are disposed upper and lower radiators 31, 32 for keeping engine coolant at a certain temperature. Immediately behind the engine 20, an alternator (generator) 30 is disposed so as to face the bottom of the fuel tank 15.

An exhaust system of the engine 20 includes four exhaust pipes 33 connected to respective exhaust ports, which are formed in the forward wall of the cylinder head 24 for the respective cylinders, and extending downward from the forward wall of the cylinder head 24, passing the lower side of the engine 20 and then extending rearward; and a muffler 34 connected to the exhaust pipes 33 and disposed on the right side of the rear wheel 12.

In a space defined by the top cover 17, there are provided an ECU 4 for controlling the operating states of the engine 20, and electrical accessories such as a regulator for controlling the charge level of electric current generated by the alternator 30. Removing the top cover 17 permits the inspection and maintenance of the electrical accessories.

The seat 5 includes a resinous seat frame 6 attached to the upper ends of the left and right rear arm brackets 4, 4 and extending obliquely upward and rearward; and a resinous seat cushion 7 disposed on the seat frame 6.

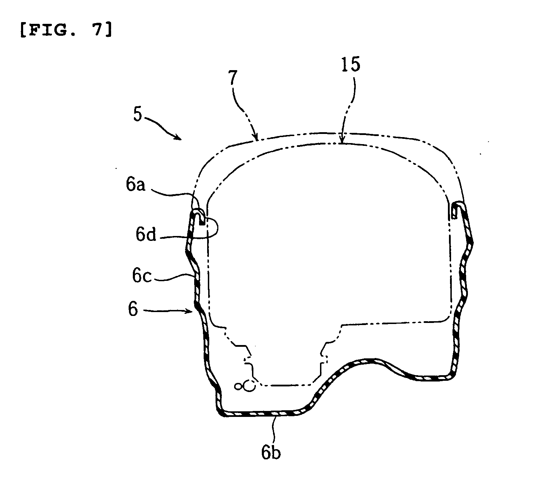

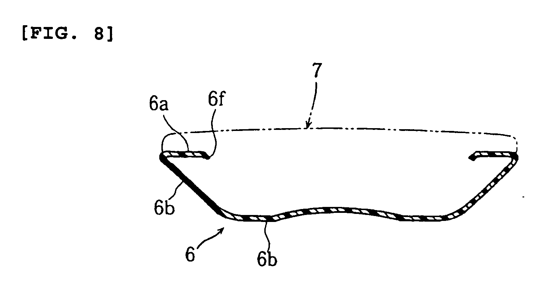

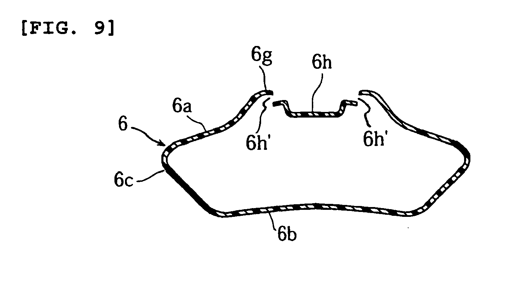

The seat frame 6 is a tubular member, with a front portion in a substantially rectangular shape when viewed in a cross sectional view (see FIG. 7) and a central portion and a rear portion both in a laterally extending elliptical shape when viewed in a cross sectional view (see FIGs. 8 and 9). The seat frame includes a top wall 6a, a bottom wall 6b, and side walls 6c each having a curved surface and extending between and connected to the side ends of the walls 6a, 6b into one body.

A front portion of the top wall 6a has a rectangular cutout 6d. The extension 15b of the fuel tank 15 is disposed within a space defined by the cutout. On the left and right edges of the cutout 6d, there are respectively formed left and right upper attachment arm parts 6e, 6e so as to extend forward. The left and right upper attachment arm parts 6e, 6e are rigidly secured to the left and right rear arm brackets 4, 4 toward the upper ends thereof with bolts 54a.

The top wall 6a has a substantially rectangular opening 6f behind the cutout 6d and at a substantially central portion in the longitudinal direction of the top wall 6a. A rear stepped portion 6g defines a rear portion of the top wall 6a and is located behind the opening 6f. The rear stepped portion is formed so as to be located above the opening 6f. The rear stepped portion 6g has a recess 6h of a substantially triangular shape when viewed in a plan view. The vertical wall of the recess 6h has air introduction openings 6h'. The bottom wall of the recess 6h also has an air introduction opening 6h" at its front end.

The seat cushion 7 is in a flat shape, and selectively covers and uncovers the opening 6f, and covers the extension 15b of the fuel tank 15. The seat cushion 7 has a retaining lug 7a at the bottom face thereof. The seat cushion can be selectively attached and removed by bringing the retaining lug 7a into and out of engagement with a retained hole of the top wall 6a. The seat cushion 7 will press against the extension 15b with rider's weight when the rider is seated on the seat cushion.

The bottom wall 6b generally extends obliquely upward and rearward substantially in a straight line when viewed in a side view. A front portion of the bottom wall has a stepped-down portion 6i that is formed in a stepped-down manner so as to cover the bottom 15e of the extension 15b of the fuel tank 15 in spaced-apart relationship from the bottom 15e. The stepped-down portion 6i toward its rear end has a pair of left and right air outlets 6m, 6m. The air outlets 6m are formed so as to face the rear end of the bottom 15e of the extension 15b.

The left and right ends of the stepped-down portion 6i are respectively formed with left and right lower attachment arm parts 6k, 6k extending forward. The lower attachment arm parts 6k, 6k are rigidly secured to substantially central parts in the vertical direction of the left and right rear arm brackets 4, 4 with bolts 54b.

The stepped-down portion 6i is formed with a protruded portion 6j for covering the bottom of the oil collecting section 15d in spaced-apart relationship from the bottom. The protruded portion is located on the left side in the vehicle width direction and formed to protrude downward. The front end of the protruded portion 6j has a cutout 6n positioned slightly rearward from the front end of the stepped-down portion 6i. The forward edge of the cutout 6n is also positioned slightly rearward from the front end of the oil collecting section 15d of the fuel tank 15.

The upper attachment arm part 6e and the lower attachment arm part 6k are formed in a bifurcated configuration when viewed in a side view. The left and right lower attachment parts 6k, 6k are joined together by the stepped-down portion 6i including the protruded portion 6j formed in the front portion of the bottom wall 6b. In other words, the left and right lower attachment arm parts 6k, 6k are securely connected together by the stepped-down portion 6i formed in the front portion of the bottom wall, so that the rigidity of the entire seat frame 6 is significantly increased.

The rear arm 10 has a rear fender 12a attached thereto that is disposed so as to cover the rear wheel 12. The bottom wall 6b of the seat frame 6 is formed so as to extend along the rear fender 12a.

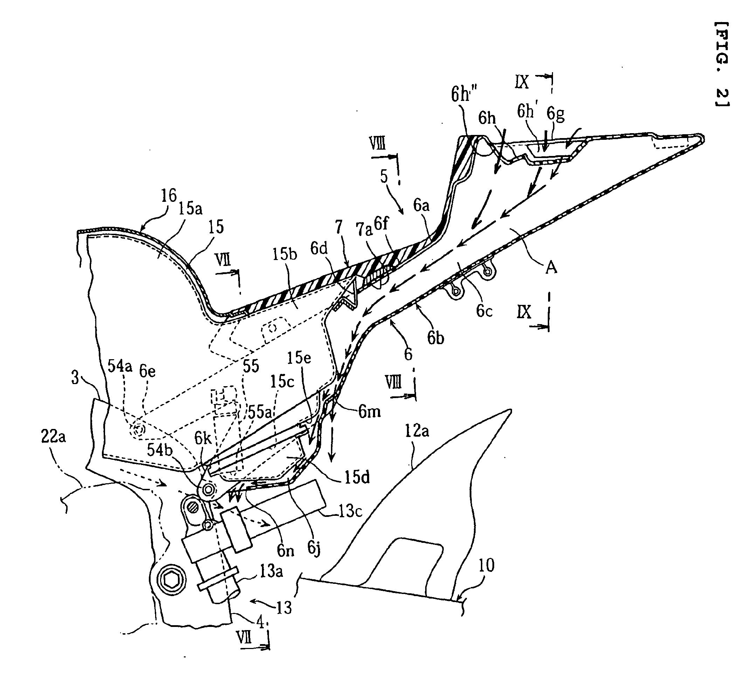

In this embodiment, when the rider straddling the seat cushion 7 drives the vehicle at high speeds, a negative pressure area will develop on the back of the rider due to a running wind. Air is thus forced into the negative pressure area from the outside thereof, and as the forced-in air hits the rear stepped portion 6g of the seat frame 6 behind the rider, a positive pressure area will develop on the rear stepped portion 6g. Meanwhile, another negative pressure area will develop between the bottom wall of the fuel tank 15 and the upper faces of the crankcase 22 of the engine 20 and the transmission case 22a under the influence of a running wind indicated by broken lines in FIG. 2. In this embodiment, therefore, there is formed a passage communicating the positive pressure area and the negative pressure areas to thereby form an airflow from the back of the rider toward the bottom of the fuel tank and thus cool the fuel tank 15 from the outside of its bottom portion.

More specifically, in this embodiment, the air introduced from the air introduction openings 6h' and 6h" formed behind the seat cushion 7 flows through a space defined by the seat frame 6 toward the bottom 15e of the fuel tank 15, through spaces between the bottom 15e and the stepped-down portion 6i and between the oil collecting section 15d and the protruded portion 6j, and then runs down to the outside from the front end of the bottom wall 6b. It is thus possible to cool the bottom portion of the fuel tank 15. In this case, the air is ambient air under no influence of engine heat or the like, which effects reliable cooling of the bottom portion of the fuel tank 15.

Further, the oil collecting section 15d is formed to protrude downward, so that the surface area thereof to be subjected to the air relatively increases, thereby effecting more reliable cooling. In this respect, since the protruded portion 6j has the cutout 6n at its front end, a larger volume of air is forced out of the cutout to thereby cool specifically the oil collecting section 15d. Since the oil collecting section 15d has the fuel pump 55 attached thereto, the fuel in the oil collection section 15d will increase in temperature due to the heat generated from the pump 55. The cooling effect by the air, however, can avoid an abnormal increase in the temperature of the fuel.

The air that cooled the bottom of the fuel tank 15 is made to flow toward the cushion unit 13a and a gas chamber 13c of the rear suspension 13, making it possible to avoid an abnormal increase in the temperature of the cushion unit 13a and the like. In this respect, since the air outlets 6m are formed in the vicinity of the rear end of the stepped-down portion 6i of the bottom wall 6b, part of the air yet to cool the fuel tank 15, thus having lower temperature, flows through the outlets 6m and then passes in the vicinity of the gas chamber 13c and the like. This makes it possible to provide more reliable cooling to the cushion unit 13a and the gas chamber 13c.

Further, the air that passed through the space defined by the seat frame 6 is to flow rearward while being rectified by the rear fender 12a disposed above the rear wheel 12, which ensures the proper airflow.

The description above discloses (amongst others) in order to solve the foregoing problem, that the present inventor paid his attention to the following points: When a rider drives a motorcycle, a negative pressure area will develop on the back of the rider due to a running wind. Air forced into the negative pressure area from the outside thereof will hit the surface of part of a seat frame behind the rider. A positive pressure area will thus develop on the surface of such part, and another negative pressure area will develop between the bottom wall of the fuel tank and the upper face of a crankcase of the engine under the influence of a running wind. The present inventor, therefore, conceived and made the present invention based on the idea of forming a passage communicating the positive pressure area and the negative pressure areas to thereby form an airflow from the back of the rider toward the bottom of the fuel tank.

Likewise, there is disclosed an embodiment of a motorcycle including: a body frame; an engine suspended from and supported by a lower part of the body frame; a fuel tank mounted on the body frame so as to be located behind and above the engine; and a seat disposed behind the fuel tank, in which the seat includes: a seat frame attached to the body frame and extending rearward; and a seat cushion mounted on the seat frame, and in which the seat frame has an air introduction opening formed behind the seat cushion, and defines an air passage for guiding air introduced from the air introduction opening toward a bottom wall of the fuel tank.

As described above, a positive pressure area will develop on the surface of the part of the seat frame behind the seat cushion under the influence of a running wind, and a negative pressure area will develop between the bottom portion of the fuel tank and the engine under the influence of the running wind. In the present invention, therefore, an air introduction opening is formed in the part of the seat frame behind the seat cushion, and an air passage is formed extending from the air introduction opening toward the bottom wall of the fuel tank. This makes it possible to guide air from the air introduction opening through the air passage toward the bottom wall of the fuel tank, to thereby cool the bottom portion of the fuel tank. In this case, the air is ambient air under no influence of engine heat or the like, which effects reliable cooling of the bottom portion of the fuel tank. It should be noted that it is possible to use the air flowing between the engine and the bottom portion of the fuel tank to cool the fuel tank; however, such air might be hot due to engine heat, which provides less cooling effect.

The description above further discloses, according to a first preferred aspect, an embodiment of a motorcycle comprising: a body frame; an engine suspended from and supported by a lower part of the body frame; a fuel tank mounted on the body frame so as to be located behind and above the engine; and a seat disposed behind the fuel tank, wherein the seat includes: a seat frame attached to the body frame and extending rearward; and a seat cushion mounted on the seat frame, and wherein the seat frame has an air introduction opening formed behind the seat cushion, and defines an air passage for guiding air introduced from the air introduction opening toward a bottom wall of the fuel tank.

Further, according to a second preferred aspect, the body frame includes left and right tank rails, and the seat frame having a tubular shape extends rearward, has a front part attached to the left and right tank rails, and includes: a top wall; a bottom wall; and left and right side walls respectively extending between and connecting the left and right ends of the top wall and the bottom wall in one body, wherein the air introduction opening is formed in the top wall and behind the seat cushion, wherein the bottom wall is formed so as to cover a bottom portion of the fuel tank from below, and wherein the air introduced from the air introduction opening is directed forward through a space between the bottom portion of the fuel tank and the seat frame.

Further, according to a third preferred aspect, a rear cushion is disposed below a forward part of the seat frame, and the bottom wall has an air outlet for guiding the air toward the rear cushion.

Further, according to a fourth preferred aspect, the air outlet is formed at the rear end of a stepped-down portion that is formed on the bottom wall.

Further, according to a fifth preferred aspect, the bottom portion of the fuel tank has an oil collecting section protruding downward, and wherein a portion of the seat frame opposed to the oil collecting section has a protruded portion protruding downward.

Further, according to a sixth preferred aspect, the front end of the protruded portion has a cutout recessed rearward.

Further, according to a seventh preferred aspect, the top wall of the seat frame has: a top wall cutout formed in a front portion thereof and being open forward; and an opening formed behind the top wall cutout and being open upward, wherein a space defined by the top wall cutout is substantially occupied by a rear portion of the fuel tank, and the opening is covered by the seat cushion.

Further, according to an eighth preferred aspect, a front portion of the seat cushion is disposed on the upper face of a rear portion of the fuel tank.

Further, according to a ninth preferred aspect, the bottom wall of the seat frame is formed so as to extend along the top face of a rear fender that covers a rear wheel.

The description further discloses as a particularly preferred embodiment, in order to provide a motorcycle in which a bottom portion of a fuel tank can be prevented from being heated by engine heat to thereby avoid an increase in the temperature of the fuel; an embodiment of a motorcycle 1, which includes: a body frame 1a; an engine 20 suspended from and supported by a lower part of the body frame 1 a; a fuel tank 15 mounted on the body frame 1 a so as to be located behind and above the engine 20; and a seat 5 disposed behind the fuel tank 15. Therein, the seat 5 includes a seat frame 6 attached to the body frame 1 a and extending rearward, and a seat cushion 7 mounted on the seat frame 6. Further, the seat frame 6 has an air introduction opening 6h' formed behind the seat cushion 7, and defines an air passage "A" for guiding air introduced from the air introduction opening 6h' toward a bottom wall of the fuel tank 15.

## Claims

1. Straddle-type vehicle, in particular a motorcycle, comprising: a body frame (1a);
an engine (20) supported by the body frame (1a); a fuel tank (15) mounted on the body frame so as to be located adjacent to the engine; and a seat (5) disposed adjacent to the fuel tank (15),
wherein the seat (5) includes: a seat frame (6) attached to the body frame (1a) and a seat cushion (7) mounted on the seat frame (6), **characterized in that** the seat frame (6) has an air introduction opening (6h', 6h") formed behind the seat cushion, and provides an air passage (17) for guiding air introduced from the air introduction opening (6h', 6h") toward a bottom wall of the fuel tank (15).

2. Straddle-type vehicle according to claim 1, **characterized in that** the engine (20) is supported by a lower part of the body frame (1a), the fuel tank (15) is located behind and above the engine (20), and the seat (5) is disposed behind the fuel tank.

3. Straddle-type vehicle according to claim 1 or 2, **characterized in that** the air passage (17) is defined by the seat frame (6).

4. Straddle-type vehicle according to one of the claims 1 to 3, **characterized in that** the body frame (1 a) includes left and right tank rails (3, 3), and the seat frame (6) having a tubular shape extends rearward from the tank rails (3, 3) and has a front part attached to the left and right tank rails (3, 3).

5. Straddle-type vehicle according to one of the claims 1 to 4, **characterized in that** the seat frame (6) includes: a top wall; a bottom wall; and left and right side walls respectively extending between and connecting the left and right ends of the top wall and the bottom wall in one body.

6. Straddle-type vehicle according to claim 5, **characterized in that** the air introduction opening is formed in the top wall and behind the seat cushion.

7. Straddle-type vehicle according to claim 5 or 6 **characterized in that** the bottom wall is formed so as to cover a bottom portion of the fuel tank from below.

8. Straddle-type vehicle according to one of the claims 1 to 7, **characterized in that** the air introduced from the air introduction opening is directed forward through a space between a bottom portion of the fuel tank (15) and the seat frame (6).

9. Straddle-type vehicle according to one of the claims 1 to 8, **characterized by** a rear cushion disposed below a forward part of the seat frame (6), wherein the seat frame is provided with an air outlet for guiding the air toward the rear cushion.

10. Straddle-type vehicle according to claim 9 in combination with claim 5, **characterized in that** the air outlet is formed at the rear end of a stepped-down portion that is formed on the bottom wall of the seat frame (6).

11. Straddle-type vehicle according to one of the claims 1 to 10, **characterized in that** a bottom portion of the fuel tank (15) has an oil collecting section protruding downward, wherein a portion of the seat frame (6) opposed to the oil collecting section has a protruded portion protruding downward.

12. Straddle-type vehicle according to claim 11, **characterized in that** the front end of the protruded portion has a cutout recessed rearward.

13. Straddle-type vehicle according to one of the claims 5 to 12 in combination with claim 5, **characterized in that** the top wall of the seat frame (6) has: a top wall cutout formed in a front portion thereof and being open forward; and an opening formed behind the top wall cutout and being open upward, wherein a space defined by the top wall cutout is substantially occupied by a rear portion of the fuel tank (15), and the opening is covered by the seat cushion (7).

14. Straddle-type vehicle according to one of the claims 1 to 13, **characterized in that** a front portion of the seat cushion (7) is disposed on the upper face of a rear portion of the fuel tank (15).

15. Straddle-type vehicle according to one of the claims 5 to 14 in combination with claim 5, **characterized in that** the bottom wall of the seat frame (6) is formed so as to extend along the top face of a rear fender that covers a rear wheel.

## Patentansprüche

1. Fahrzeug vom Spreizsitz- Typ, insbesondere ein Motorrad, aufweisend einen Karosserierahmen (1 a); eine Brennkraftmaschine (20), gelagert durch den Karosserierahmen (1a); einen Kraftstofftank (15), montiert an dem Karosserierahmen, so dass er zu der Brennkraftmaschine benachbart ist; und einen Sitz (5), angeordnet benachbart zu dem Kraftstofftank (15),
wobei der Sitz (5) enthält: einen Sitzrahmen (6), verbunden mit dem Karosserierahmen (1a), und ein Sitzkissen (7), montiert an dem Sitzrahmen (6), **dadurch gekennzeichnet, dass** der Sitzrahmen (6) eine Lufteinleitungsöffnung (6h', 6h"), gebildet hinter dem Sitzkissen, hat und einen Luftkanal (17) vorsieht, zum Führen von Luft, eingeleitet von der Lufteinleitungsöffnung (6h', 6h") in Richtung zu einer Bodenwand des Kraftstofftanks (15).

2. Fahrzeug vom Spreizsitz- Typ nach Anspruch 1, **dadurch gekennzeichnet, dass** die Brennkraftmaschine (20) durch einen unteren Teil des Karosserierahmens (1 a) gelagert ist, der Kraftstofftank (15) hinter und oberhalb der Brennkraftmaschine (20) gelagert ist und der Sitz (5) hinter dem Kraftstofftank angeordnet ist.

3. Fahrzeug vom Spreizsitz- Typ nach Anspruch 1 oder 2, **dadurch gekennzeichnet, dass** der Luftkanal (17) durch den Sitzrahmen (6) gebildet ist.

4. Fahrzeug vom Spreizsitz- Typ nach einem der Ansprüche 1 bis 3, **dadurch gekennzeichnet, dass** der Karosserierahmen (1 a) linke und rechte Tankschienen (3, 3) enthält und der Sitzrahmen (6), der eine Rohrform hat, sich nach hinten von den Tankschienen (3, 3) erstreckt und einen vorderen Teil, verbunden an den linken und rechten Tankschienen (3, 3), hat.

5. Fahrzeug vom Spreizsitz- Typ nach einem der Ansprüche 1 bis 4, **dadurch gekennzeichnet, dass** der Sitzrahmen (6) enthält: eine oberste Wand; eine Bodenwand; und jeweils linke und rechte Seitenwände, die sich jeweils zwischen den linken und rechten Enden der obersten Wand und der Bodenwand erstrecken, diese zu einem Körper verbindend.

6. Fahrzeug vom Spreizsitz- Typ nach Anspruch 5, **dadurch gekennzeichnet, dass** die Lufteinleitungsöffnung in der obersten Wand und hinter dem Sitzkissen gebildet ist.

7. Fahrzeug vom Spreizsitz- Typ nach Anspruch 5 oder 6, **dadurch gekennzeichnet, dass** die Bodenwand gebildet ist, um einen Bodenabschnitt des Kraftstofftanks von unten abzudecken.

8. Fahrzeug vom Spreizsitz- Typ nach einem der Ansprüche 1 bis 7, **dadurch gekennzeichnet, dass** die von der Lufteinleitungsöffnung eingeleitete Luft nach vorn durch einen Raum zwischen einem Bodenabschnitt des Kraftstofftanks (15) und dem Sitzrahmen (6) gerichtet wird.

9. Fahrzeug vom Spreizsitz- Typ nach einem der Ansprüche 1 bis 8, **gekennzeichnet durch** ein hinteres Kissen, angeordnet unter einem vorderen Teil des Sitzrahmens (6), wobei der Sitzrahmen mit einem Luftauslass zum Führen der Luft in Richtung zu dem hinteren Kissen versehen ist.

10. Fahrzeug vom Spreizsitz- Typ nach Anspruch 9 in Kombination mit Anspruch 5, **dadurch gekennzeichnet, dass** der Luftauslass an dem hinteren Ende eines nach unten gestuften Abschnittes gebildet ist, der an der Bodenwand des Sitzrahmens (6) gebildet ist.

11. Fahrzeug vom Spreizsitz- Typ nach einem der Ansprüche 1 bis 10, **dadurch gekennzeichnet, dass** ein Bodenabschnitt des Kraftstofftanks (15) einen Ölsammelabschnitt hat, der nach unten vorspringt, wobei ein Abschnitt des Sitzrahmens (6), gegenüberliegend zu dem Ölsammelabschnitt, einen vorspringenden Abschnitt hat, der nach unten vorspringt.

12. Fahrzeug vom Spreizsitz- Typ nach Anspruch 11, **dadurch gekennzeichnet, dass** das vordere Ende des vorspringenden Abschnittes einen nach hinten ausgeschnitten Ausschnitt hat.

13. Fahrzeug vom Spreizsitz- Typ nach einem der Ansprüche 5 bis 12 in Kombination mit Anspruch 5, **dadurch gekennzeichnet, dass** die oberste Wand des Sitzrahmens (6) aufweist: einen Ausschnitt der obersten Wand, gebildet in einem vorderen Abschnitt derselben und der nach vorn geöffnet ist; und eine Öffnung, gebildet hinter dem Ausschnitt der obersten Wand und die nach oben offen ist, wobei ein Raum, gebildet durch den Ausschnitt der obersten Wand, im Wesentlichen durch einen hinteren Abschnitt des Kraftstofftanks (15) eingenommen wird und die Öffnung durch das Sitzkissen (7) abgedeckt ist.

14. Fahrzeug vom Spreizsitz- Typ nach einem der Ansprüche 1 bis 13, **dadurch gekennzeichnet, dass** ein vorderer Abschnitt des Sitzkissens (7) an der oberen Fläche eines hinteren Abschnittes des Kraftstofftanks (15) angeordnet ist.

15. Fahrzeug vom Spreizsitz- Typ nach einem der Ansprüche 5 bis 14 in Kombination mit Anspruch 5, **dadurch gekennzeichnet, dass** die Bodenwand des Sitzrahmens (6) gebildet ist, um sich entlang der Spitzenfläche eines hinteren Schutzbleches, das ein Hinterrad abdeckt, zu erstrecken.

## Revendications

1. Véhicule du type à enfourcher, en particulier motocycle, comprenant : un cadre (1a) ; un moteur (20) porté par le cadre (1a) ; un réservoir de carburant (15) monté sur le cadre de manière à se trouver près du moteur ; et un siège (5) disposé près du réservoir de carburant (15),
étant précisé que le siège (5) comprend : un châssis de siège (6) fixé au cadre (1a) et un coussin de siège (7) monté sur le châssis de siège (6), **caractérisé en ce que** le châssis de siège (6) a une ouverture d'introduction d'air (6h', 6h") formée derrière le coussin de siège, et forme un passage d'air (17) pour guider l'air introduit de l'ouverture d'introduction (6h', 6h") vers une paroi inférieure du réservoir de carburant (15).

2. Véhicule du type à enfourcher selon la revendication 1, **caractérisé en ce que** le moteur (20) est supporté par une partie inférieure du cadre (1a), le réservoir de carburant (15) se trouve derrière le moteur (20) et au-dessus de celui-ci, et le siège (5) est disposé derrière le réservoir de carburant.

3. Véhicule du type à enfourcher selon la revendication 1 ou 2, **caractérisé en ce que** le passage d'air (17) est défini par le châssis de siège (6).

4. Véhicule du type à enfourcher selon l'une des revendications 1 à 3, **caractérisé en ce que** le cadre (1a) comprend des rails de réservoir gauche et droit (3, 3), et le châssis de siège (6), de forme tubulaire, s'étend vers l'arrière à partir des rails de réservoir (3, 3) et a une partie avant fixée aux rails de réservoir gauche et droit (3, 3).

5. Véhicule du type à enfourcher selon l'une des revendications 1 à 4, **caractérisé en ce que** le châssis de siège (6) comprend : une paroi supérieure ; une paroi inférieure ; et des parois latérales gauche et droite qui s'étendent respectivement entre les extrémités gauches et droites de la paroi supérieure et de la paroi inférieure et qui relient lesdites extrémités en une seule pièce.

6. Véhicule du type à enfourcher selon la revendication 5, **caractérisé en ce que** l'ouverture d'introduction d'air est formée dans la paroi supérieure et derrière le coussin de siège.

7. Véhicule du type à enfourcher selon la revendication 5 ou 6, **caractérisé en ce que** la paroi inférieure est formée de manière à couvrir par-dessous une partie inférieure du réservoir de carburant.

8. Véhicule du type à enfourcher selon l'une des revendications 1 à 7, **caractérisé en ce que** l'air introduit par l'ouverture d'introduction d'air est dirigé vers l'avant à travers un espace entre une partie inférieure du réservoir de carburant (15) et le châssis de siège (6).

9. Véhicule du type à enfourcher selon l'une des revendications 1 à 8, **caractérisé par** un coussin arrière disposé sous une partie avant du châssis de siège (6), le châssis de siège étant pourvu d'une sortie d'air pour guider l'air vers le coussin arrière.

10. Véhicule du type à enfourcher selon la revendication 9 combinée avec la revendication 5, **caractérisé en ce que** la sortie d'air est formée à l'extrémité arrière d'une partie étagée vers le bas qui est formée sur la paroi inférieure du châssis de siège (6).

11. Véhicule du type à enfourcher selon l'une des revendications 1 à 10, **caractérisé en ce qu'**une partie inférieure du réservoir de carburant (15) a une partie de récupération d'huile qui dépasse vers le bas, une partie du châssis de siège (6) opposée à la partie de récupération d'huile ayant une partie saillante qui dépasse vers le bas.

12. Véhicule du type à enfourcher selon la revendication 11, **caractérisé en ce que** l'extrémité avant de la partie saillante a une échancrure creusée vers l'arrière.

13. Véhicule du type à enfourcher selon l'une des revendications 5 à 12 combinées avec la revendication 5, **caractérisé en ce que** la paroi supérieure du châssis de siège (6) a : une échancrure de paroi supérieure formée dans une partie avant et ouverte vers l'avant ; et une ouverture formée derrière l'échancrure de paroi supérieure et ouverte vers le haut, un espace défini par ladite échancrure de paroi supérieure étant globalement occupé par une partie arrière du réservoir de carburant (15) et l'ouverture étant couverte par le coussin de siège (7).

14. Véhicule du type à enfourcher selon l'une des revendications 1 à 13, **caractérisé en ce qu'**une partie avant du coussin de siège (7) est disposée sur la face supérieure d'une partie arrière du réservoir de carburant (15).

15. Véhicule du type à enfourcher selon l'une des revendications 5 à 14 combinées avec la revendication 5, **caractérisé en ce que** la paroi inférieure du châssis de siège (6) est formée de manière à s'étendre le long de la face supérieure d'un garde-boue arrière qui couvre une roue arrière.
